Europäisches Patentamt

European Patent Office

Office européen des brevets

(19)

(11)  **EP 1 648 166 A2**

(12)     **EUROPEAN PATENT APPLICATION**

(43) Date of publication:
**19.04.2006 Bulletin 2006/16**

(51) Int Cl.:
*H04N 5/232* (2006.01)

(21) Application number: **05256446.5**

(22) Date of filing: **18.10.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **Matsuoka, Miki**<br>  **Simogyo-ku**<br>  **Kyoto-shi, Kyoto 600-8530 (JP)**<br>• **Shimizu, Atsushi**<br>  **Simogyo-ku**<br>  **Kyoto-shi, Kyoto 600-8530 (JP)** |
| (30) Priority: **18.10.2004 JP 2004303143** | |
| (71) Applicant: **OMRON CORPORATION**<br>**Kyoto-shi, Kyoto 600-8530 (JP)** | (74) Representative: **Calderbank, Thomas Roger et al**<br>**Mewburn Ellis LLP**<br>**York House**<br>**23 Kingsway**<br>**London WC2B 6HP (GB)** |

(54)    **Image pickup unit**

(57)    This invention provides a unit capable of photographing an object person having an expression desired by user easily. A memory means (9) preliminarily memorizes a feature acquired from an image (image selected by user) containing a face having an expression desired by user as an expression judging feature. Upon photographing, an image pickup means (2) picks up a plurality of images corresponding to an image pickup instruction by user. A determining means (11) determines the degree of similarity by comparing an expression judging feature memorized preliminarily with an expression judging feature acquired from a face of each picked up image. Then, an image containing a face whose expression judging feature is determined to be similar is recorded as an image for output.

Fig. 1

**EP 1 648 166 A2**

**Description**

The present invention relates to technology effective when applied to an image pickup unit for photographing an image (particularly an image picking up a human face), an information processing unit and output unit handling an image, software and the like.

since before, a unit capable of photographing an image desired by user easily has been demanded. The image desired by user is, for example, an image containing an object having an expression desired by user (user can be a subject as well as a photographer) . As a specific example of such technology, technology which detects a condition in which eyes of an object person are opened (open eye condition) based on red eye phenomenon and automatically releases a shutter has been disclosed. Additionally, technology which automatically releases the shutter by detecting a facial expression such as smile of an object person has been also disclosed. According to these technologies, an image of a subject person with open eyes or an image of a subject person having a smiling expression can be photographed easily.

There is a technology which records (or does not record) a program desired by user by collating a face of a person in an animation with a face registered in database preliminarily and recording frames before and after a frame containing a coinciding person. According to such conventional technologies, an image desired by user, more specifically a program containing a person desired by user can be photographed (recorded).

However, any technology mentioned above has not yet achieved a method for enabling an image desired by each user to be photographed easily.

People often carry an image pickup unit (optical film analog camera, digital camera and the like) when traveling to a site-seeing place. They take a self-portrait photograph with a scene or building as background. At this time, it is very difficult to take the self-portrait photograph for himself or herself. For the reason, if a person wants to take a picture of himself when he travels alone or take a picture of all participants when they travel together, he cannot help asking other person who happens to be there saying, "Would you please push the button of the shutter?" However, he often feels it difficult to ask directly how he wants that other person to take a picture, because he asks that person according to his own desire. As a result, it often comes that a taken picture does not fit to his expectation so that he is disappointed at such an undesired expression. In case of a digital image pickup unit (which photographs an image with an electronic image pickup device such as digital camera, portable phone with camera), a result of the image pickup can be recognized just on site. Therefore, if he is never satisfied with the result, he can ask other person to take pictures again by explaining an expression desired by him. However, since a desire for expression is subjective, a desire of a person, which is a subject, does not always coincide with a desire of other person who actually takes picture and in the case where those desires do not coincide, the same result occurs even if he is repeatedly photographed. Further, he has a choice of asking again other person who happens to be there to push the shutter button. However, in this case also, it is difficult to find out a person whose desire coincides, as regards an expression believed to depend largely on individual desire. In most cases, even if an undesired picture is produced, people resign themselves to that result.

After considering conventional technology, it is found that technology for automatically releasing the shutter by detecting a facial expression such as simile has been disclosed in documents describing the aforementioned conventional technology, that is, technology for taking picture by detecting an open eye or a smile. However, this desire can be satisfied by only asking to push the shutter button when a smile appears, when he says, "Would you please push the shutter button?" The reason is that although desired expressions vary depending on individual persons, there is little difference in determining whether or not an expression is a smile. That is, because determination on whether or not an expression is a smile is a determination which can be achieved sufficiently even if it is requested to other person, this demand can be solved if a person who can be asked to take picture can be found out. On the other hand, people have their own tastes and particularly, the face and its expression are said to be portions in which individual tastes are likely to appear. The above-described conventional technology has been lack of attention required when taking a picture of a face which individual persons have their own taste upon. That'is, individual desired expression is automatically determined in a sensory region which he cannot express clearly, such as the degree of smile on the mouth of a smiling face, the degree of opening of the eye, the degree of drooping of the corner of eye. However, the above-described conventional technology has not reflected such sensory individual taste on an image.

The present invention intends to provide a unit capable of taking picture of an object having an expression corresponding to individual user's desire.

To take picture of an object having an expression desired by individual user, the image pickup unit of the present invention takes picture of plural images and determines and records an image containing an object having an expression according to user's desire from the taken plural images. At this time, the image pickup unit of the present invention judges whether or not an expression desired by user is contained based on a feature relating to an image. Therefore, the image pickup unit of the present invention achieves meeting individual user's desire by enabling the feature for use in this determination to be registered or changed depending on the individual user's desire.

To achieve the above-described operation, the image pickup unit of the present invention comprises an image pickup means, a detecting means, an acquiring means, a memory means, a determining means, and a recording means. The image pickup means picks up plural images electronically according to a single photographing instruction by user. That is, if such a photographing instruction is given by user, the image pickup means takes not a single image, but plural images. All taking picture of plural images are taking picture aiming at recording those images (regardless of whether or not finally recorded), for example, they are not taking picture for other purposes than recording, such as determination of red eye phenomenon, adjustment of white balance and detection of a predetermined position. Therefore, the taking pictures with an image pickup means is carried out based on a focal position or resolution specified by user. In the meantime, the image pickup means may take picture for other purpose than the recording as well as taking picture of plural images.

The detecting means detects a human face from an image selected by user or a taken image. The image selected by user may be an image photographed, an image recorded in a recording means preliminarily or an image inputted into the image pickup unit from other unit.

The acquiring means acquires a feature relating to an image from a detected face. The feature relating to an image is a feature originating from pixel value of each pixel constituting the image, and may be, for example, a value obtained by Gabor wavelet transform.

Of the feature quantities, the memory means memorizes a feature acquired from an image selected by user.

The determining means regards part or all of plural images picked up by the image pickup means as an object of processing. Then, the determining means determines the degree of similarity by comparing a feature memorized in the memory means with a feature acquired from each image taken.

If it is determined that both the feature quantities are similar as a result of the determination, the recording means records this taken image as an image for output.

According to the image pickup unit of the present invention, the memory means memorizes a feature acquired from an image selected by user. If an image pickup instruction is given by user, plural images are taken and the degree of similarity between the feature memorized and the feature acquired from each taken image is determined. Then, of plural images taken, only an image whose feature is similar is recorded in the recording means. A determination is made based on the feature of the face contained in this selected image by user's selecting an image containing a face desired by himself. Therefore, user can judge an expression corresponding to his individual taste.

According to the image pickup unit of the present invention, plural images are taken according to a single image pickup instruction by user. If only a single image is taken according to a single image pickup instruction by user, an image to be taken depends on timing of giving an image pickup instruction by user. However, if plural images are taken, there can be a case where an image containing an expression desired by user exists, so that such an image can be taken without depending on the timing of giving an image pickup instruction by user. If an image containing an expression desired by user exists, it is possible to acquire this image from plural taken images as an image for output and record it in the recording means by cooperation of the detecting means, acquiring means and determining means.

The image pickup unit of the present invention may further include a control means for determining a termination of image pickup processing by the image pickup means. In this case, the image pickup means terminates the image pickup processing if it is determined that the image pickup processing should be terminated by the control means. The control means determines that the image pickup processing should be terminated when for example, a predetermined number of images are taken by the image pickup means, a predetermined time passes since the pickup of images is started or a predetermined number of images are recorded in tha recording means as images for output.

The acquiring means equipped on the image pickup unit of the present invention may be so constructed to detect a facial organ from a detected face and dispose plural feature points based on the positions of the detected organ. Then, this acquiring means may be so constructed to acquire a feature by acquiring the image feature of each feature point. The facial organ is, for example, eyes, nose, nostril, mouth (lip), eyebrow, jaw, forehead and the like.

The image pickup unit of the present invention may be so constructed to further include an individual person identifying means for specifying an individual person with respect to a detected face. In this case, the acquiring means acquires an individual person identifying feature for use in specifying the individual person with respect to the detected face and an expression judging feature for determining an expression of the detected face. The individual person identifying feature is a feature for use in specifying an individual person with the individual person identifying means. The expression judging feature is a feature for use in determining the degree of similarity with the determining means. In this case, the individual person identifying feature and the expression judging feature acquired from a face of the same person are memorized with correspondence between the both. For example, the memory means may memorize the individual person identifying feature and the expression judging feature acquired from a face of the same person with a same identifier corresponding to the both.

Further, in this case, the individual person identifying means specifies an individual person with respect to a face detected from this taken image using the individual person identifying feature memorized in the memory means and the individual person identifying feature acquired from the taken image. The determining means determines the degree of similarity by comparing an expression judging feature memorized in the memory means corresponding to the individual person identifying quantity of a specified person with the expression judging feature acquired from the taken image. In the image pickup unit of the present invention having such a structure, an individual person is specified with respect to each face contained in the taken image. Then, the determining means determines the degree of similarity based on an expression judging feature particular to an individual person having each face. Because the degree of similarity is determined based on the expression judging feature particular to each person, whether or not that expression is desired by user can be determined accurately. In other words, according to the image pickup unit of the present invention, an expression desired by each person can be determined not with a uniform standard about all faces but based on a standard particular to each person's face.

According to the present invention, a program may be realized by an information processing unit. That is, the above-described operation and effect can be obtained with a program for making the information processing unit execute a processing which each means in the image pickup unit of the present invention executes or with a recording medium which records that program. Further, the above-described operation and effect may be obtained according to a method for the information processing unit to execute a processing which each means of the image pickup unit of the present invention executes.

The present invention enables user to take picture of a photographing object having an expression desired by each user easily without depending on the skill of user of that image pickup unit.

IN THE DRAWINGS:

Fig. 1 shows a diagram showing an example of functional blocks of the image pickup unit.
Fig. 2 shows a diagram showing an example of plural feature points.
Fig. 3 shows a diagram showing an example of a Gabor filter.
Fig. 4 shows a diagram showing an example of memory content of the feature memory portion.
Fig. 5 shows a diagram showing an example of the individual person identifying feature.
Fig. 6 shows a diagram showing an example of the expression judging feature.
Fig. 7 shows a flow chart indicating an operation example when the image pickup unit is in registration condition.
Fig. 8 shows a diagram showing a display example of the display portion.
Fig. 9 shows a flow chart indicating an operation example when the image pickup unit is in image pickup condition.
Fig. 10 shows a flow chart indicating an operation example when the image pickup unit is in image pickup condition.

Next, an image pickup unit 1 will be described with reference to accompanying drawings. Description below of the image pickup unit 1 is exemplified and its structure and operation are not restricted to the description below.

[Systern configuration]

First, the system configuration of the image pickup unit 1 will be described. In viewpoints of hardware, the image pickup unit 1 comprises a CPU (central processing unit), a main storage device (RAM: random access memory), an auxiliary storage device, an image pickup mechanism and the like, these being connected via bus. The auxiliary memory device is constituted of a nonvolatile storage device. The nonvolatile storage device mentioned here includes so-called ROM (read-only memory; including EPROM (erasable programmable read-only memory), EEPROM (electrically erasable programmable read-only memory), mask ROM and the like), FRAM (ferroelactric RAM), hard disk and the like.

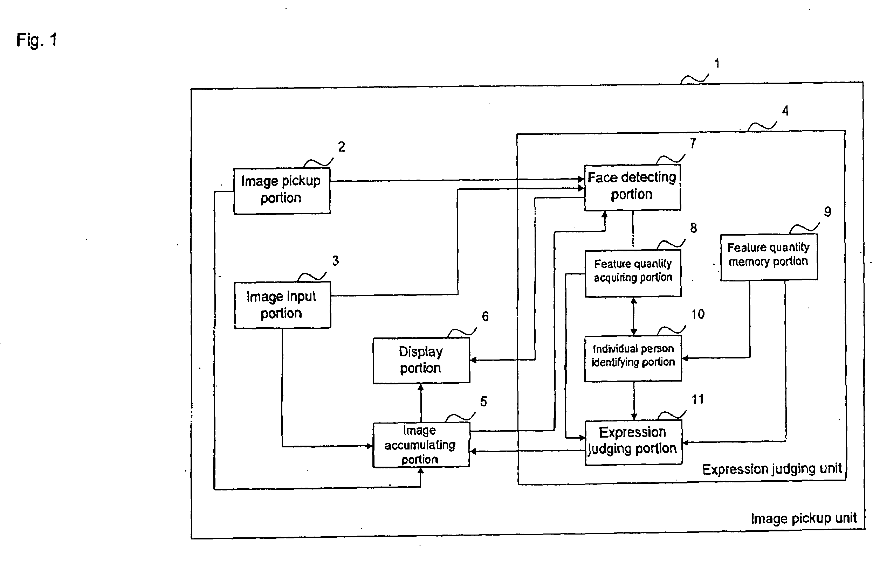

Fig. 1 is a diagram showing an example of the functional block of the image pickup unit 1. The image pickup unit 1 functions as unit including an image pickup portion 2, an image input portion 3, an expression judging unit 4, an image accumulating portion 5 and a display portion 6, in which various programs (OS, application and the like) memorized in the auxiliary storage device are loaded on the main storage device and executed by the CPU. The expression judging unit 4 is achieved by executing the program with the CPU. The expression judging unit 4 may be constituted as a special chip. The expression judging unit 4 may be constituted so as to have a CPU or RAM independent of the image pickup unit 1. Processing content to be executed by each processing portion is suitable or unsuitable for hardware or software processing. Thus, these may be installed as hybrid of hardware and software.

The image pickup unit 1 has image pickup condition and registration condition as its operation condition. The image pickup unit 1 makes different operation depending on the image pickup condition or the registration condition. Hereinafter, each function possessed by the image pickup unit 1 will be described. Flow of processing in each operation condition will be explained in detail as an operation example.

<Image pickup portion>

The image pickup portion 2 is constituted as a unit having , auto-focus function by using an image pickup lens, a mechanical system, CCD, motor and the like. The image pickup lens includes, for example, a zoom lens which achieves zoom function, a focus lens for focusing on an arbitrary object and the like. The mechanical system includes a mechanical shutter, diaphragm, filter and the like. The motor includes a zoom lens motor, focus motor, shutter motor and the like.

The above mentioned structure of the image pickup portion 2 is an example and the image pickup portion 2 may be achieved by other structure. For example, the image pickup portion 2 may be constituted by excluding the auto focus function and zoom function because they are not indispensable functions.

The image pickup portion 2 starts photographing when an instruction for photographing is given by user. The instruction for photographing may be, for example, releasing of the shutter button.

<Image input portion>

The image input portion 3 functions as an interface for inputting data of an image to the image pickup unit 1. Image data is inputted to the image pickup unit 1 by the image pickup portion 3. The image input portion 3 may be constituted by using any existing technology for inputting image data to the image pickup unit 1.

For example, image data may be inputted to the image pickup unit 1 via network (for example, local area network or Internet). In this case, the image pickup portion 3 is constituted using a network interface. Further, image data may be inputted to the image pickup unit 1 from other image pickup unit (information processing unit having digital camera or digital camera) different from the image pickup unit 1, a scanner, a personal computer, a recording unit (for example, hard disk drive) and the like. In this case, the image input portion 3 is constituted corresponding to standard (wire transmission standard such as USB (universal serial bus), SCSI (small computer system interface) and the like, Bluetooth (registered mark) and radio transmission standard) for connecting a digital camera, a personal computer, a recording unit to the image pickup unit 1 so as to enable data transmission. Image data recorded in a recording medium (for example, various flash memories, floppy (registered mark) disk, CD (compact disk), DVD (digital versatile disc, digital video disc) may be inputted to the image pickup unit 1. In this case, the image input portion 3 is constituted using a unit (for example, flash memory reader, floppy disk drive, CD drive, DVD drive) for reading data from a recording medium. The image input portion 3 may be constituted so as to be able to meet the above-described multiple cases.

<Expression judging unit>

If the image pickup unit 1 is in an image pickup condition, the expression judging unit 4 judges whether or not an expression of a face contained in an image picked up by the image pickup unit 2 is an expression desired by user. The expression judging unit 4 may be achieved by applying any technology as long as it is technology for judging whether or not an expression of an object from an image is desirable for user. Next, a specific example of technology applicable to the expression judging unit 4 in an image pickup condition will be described.

The expression judging unit 4 detects a human face from an image inputted into the expression judging unit 4. Next, the expression judging unit 4 acquires a feature (hereinafter referred to as "individual person identifying feature") for use for identification of a person from a detected face. The expression judging unit 4 identifies who a person having a detected face is based on the individual person identifying feature. Next, the expression judging unit 4 acquires a feature (hereinafter referred to as "expression judging feature") for use in judging the expression of the detected face. The expression judging unit 4 judges whether or not the expression is an expression desired by user by pattern recognition based on the expression judging feature.

If the image pickup device 1 is in registration condition, the expression judging device 4 acquires a feature (individual person identifying quantity, expression judging feature) of a face contained in an image selected by user and memorizes the individual person identifying quantity and/or the expression judging feature. At this time, user can select an image from an image picked up by the image pickup portion 2, an image inputted via the image input portion 3 or an image memorized in the image accumulating portion 5. Further, user can instruct the expression judging device 4 about which one of the individual person identifying feature and the expression judging feature should be memorized in the feature memory portion 9 or whether both of them should be memorized, based on an inputted image. At this time, if user registers a new feature about a person whose individual person identifying feature is already memorized in the feature memory portion 9, he instructs about whose feature should be registered of already registered persons. By making user to identify an individual person to be registered, it is possible to prevent ID and feature of different person from being registered with a mistaken correspondence. Thus, the individual person identifying portion 10 or the expression judging portion 11 can be actuated accurately. However, to save labor and time of user, the expression judging device 4 may be so constructed that the identification of an individual person in such a registration processing is carried out by the individual person identifying portion 10.

To achieve these processings, the expression judging unit 4 includes for example, a face detecting portion 7, a feature acquiring portion 8, feature memory portion 9, an individual person identifying portion 10 and an expression judging portion 11. Hereinafter, processing carried out by each functional portion will be described.

«Face detecting portion»

The face detecting portion 7 carries out face detection processing to an image to be inputted to the expression judging unit 4 regardless of its operating condition. An image is inputted to the face detecting portion 7 from the image pickup portion 2, the image input portion 3 or the image accumulating portion 5. In the face detection processing, the face detecting portion 7 detects a face rectangle from an image of a processing object. The face rectangle is a rectangle which surrounds the face portion of an object person.

The face detecting portion 7 outputs face rectangle information when it detects the face rectangle. The face rectangle information is information indicating the size and position of the face rectangle. For example, the face rectangle information indicates the width and coordinates of a corner upper left of the face rectangle. Other processing portion can specify the position, size and the like of an object person in an image of processing object.

The face detection processing by the face detecting portion 7 may be constructed to detect a face by template matching using a reference template corresponding to the contour of an entire face. Further, the face detecting portion 7 may be so constructed to detect a face by template matching based on components of the face (eyes, nose, ears and the like) . Further, the face detecting portion 7 may be so constructed to detect a face based on a vertex of the head hair, which is detected by chromakey processing. The face detecting portion 7 may be so constructed to detect a region near the skin color and then detect that region as a face. The face detecting portion 7 may be so constructed to detect a region resembling a face as a face by learning with teacher signals using neutral network. The face detection processing by the face detecting portion 7 may be achieved by any existing method.

«Feature acquiring portion»

The feature acquiring portion 8 disposes plural feature points to a face detected by the face detecting portion 7 regardless of its operating condition (feature point disposing processing)- At this time, the feature acquiring portion 8 disposes a feature point for acquiring the individual person identifying feature and a feature point for acquiring the expression judging feature. Then, the feature acquiring portion 8 acquires a feature of each quantity point as a feature of a face of an object person, based on the feature points disposed by the feature point disposing processing (feature acquiring processing). Hereinafter, the feature point disposing processing and feature point acquiring processing will be described.

In the feature point disposing processing, the feature points for acquiring the expression judging feature may be so constructed to be capable of being set freely by user. For example, if user pays too much attention to the expression around the eyes, the density of the feature points may be set to increase near the eyes by disposing many feature points around the eyes. Further, if user pays attention to only an expression near the eyes, it is permissible to dispose many feature points near the eyes with no feature point disposed near other organs.

<<<Feature point disposing processing>>>

In the feature point disposing processing, first, the feature acquiring portion 8 detects an organ of a detected face, The organ of the face is, for example, nose, nostril, mouth (lip), eyebrow, jaw, forehead and the like. The feature acquiring portion 8 may detect an organ of the face or plural organs. The feature acquiring portion 8 may be set in advance fixedly about which organ should be detected or may be so constructed that an organ to be detected is changed corresponding to the arrangement of the feature points set by user.

The feature acquiring portion 8 is desired to be so constructed to detect a minimum amount of organs necessary in order to acquire an individual person identifying feature or an expression judging feature. For example, if the feature points are disposed at only both eyes and mouth in order to acquire the individual person identifying feature, at least the both eyes and mouth need to be detected as an organ of the face to be detected by the feature acquiring portion 8. If the user wants only the feature around the eyes to be acquired as the expression judging feature, the feature acquiring portion 8 may be 80 constructed to detect only the eyes as the organ according to an input about the intention by the user.

Next, the feature acquiring portion 8 converts an image of a detected face into a gray scale image. The feature acquiring portion 8 executes angle normalization or size normalization of an image of a detected face based on the positional relation of a detected face organ. These processings are called pretreatment. The processing for converting an image to gray scale may be executed at any point of time in processing by the face detecting portion 7 or in the feature point disposing processing.

Next, the feature acquiring portion 8 disposes plural feature points based on the position of a detected face organ (hereinafter referred to as "attention point": for example, a point indicating both eyes or the center of the mouth). The feature acquiring portion 8 disposes feature points more densely as the attention point is approached more, while more thinly as the attention point is left more. At this time, the feature acquiring portion 8 disposes feature points for acquiring the individual person identifying feature if the processing by the individual person identifying portion 10 is not completed. On the other hand, if the processing by the individual person identifying portion 10 is completed, the feature acquiring portion 8 disposes feature points for acquiring the expression judging feature. The individual person identifying feature and the expression judging feature are different in position in which the feature point is disposed. In case of the individual person identifying feature, the feature points are disposed mainly in an organ which likely generates a difference depending on person, for example, both eyes, mouth and the like. On the other hand, in case of the expression judging feature, the feature points are disposed mainly in an organ which likely generates a change in expression, for example, both eyes, eyebrow, cheek and the like. In case of the expression judging feature, the disposition of the feature points may be set up by user as described above.

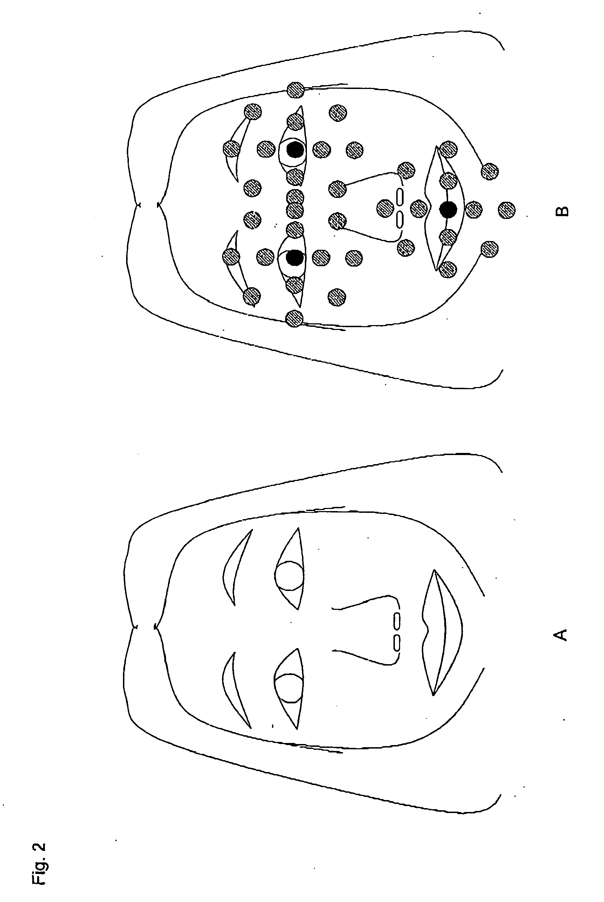

Fig. 2A is a diagram showing an example of a face of an object person detected by the face detecting portion 7. Fig. 2B is a diagram showing an example of plural feature points disposed by the feature point disposing processing. In Fig. 2B, a filled circle indicates an attention point and a shade circle indicates a feature point disposed based on the attention point. In the feature acquiring processing described below, the attention point may be handled as a feature point.

Such a feature point disposing processing can be achieved by applying retina sampling described in, for example, a following thesis.

F.Smeraldi and J.Bigun, "Facial features detection by saccadic exploration of the Gabor decomposition" International Conference on Image Processing, ICIP-98, Chicago, October 4-7, volume 3, pages 163-167, 1998

<<<Feature acquiring processing>>>

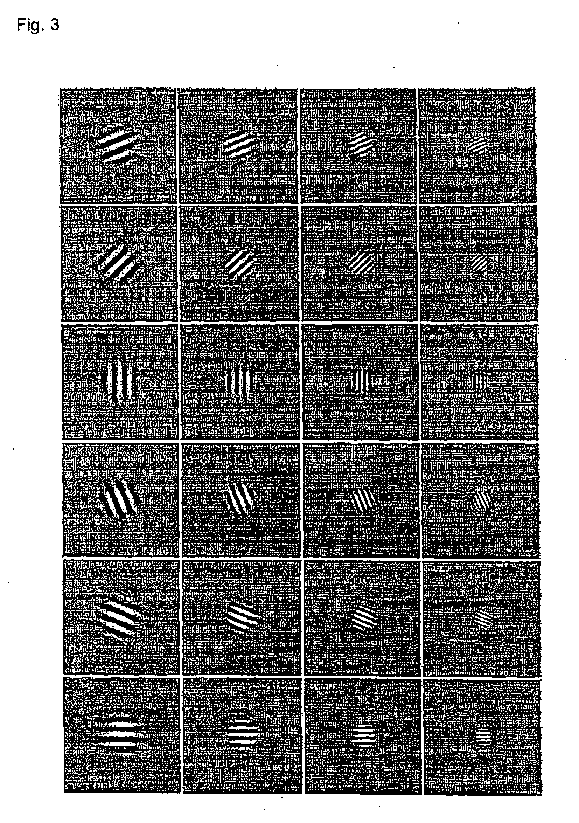

In the feature acquiring processing, the feature acquiring portion 8 folds a Gabor filter for each feature point disposed by the feature point disposing processing. That is, the feature acquiring portion 8 executes Gabor wavelets transformation (Gabor Wavelets Transformation: GWT) with respect to each feature point. Fig. 3 shows an example of a Gabor filter (actual portion) used in the feature acquiring processing. The feature acquiring portion 8 acquires cycle and direction of density around a feature point as a feature by folding plural Gabor filters whose resolution and direction are changed as shown in Fig. 3.

Formula 1 is an expression indicating the Gabor filter. In the use of the Gabor Filter, arbitrary cycle and direction can be acquired from density feature as a feature by changing k and θ in the expression.

[Formula 1]

$$\psi_{k,\theta}(x,y) := \frac{k^2}{\sigma^2}\exp\left[-\frac{k^2\left(x^2+y^2\right)}{2\sigma^2}\right] \cdot$$
$$\cdot \left\{\exp\left[ik\left(x\cos\theta + y\sin\theta\right)\right] - \exp\left(-\frac{\sigma^2}{2}\right)\right\}$$

The feature acquiring portion 8 transfers the feature of each feature point to the feature memory portion 9 or the individual person identifying portion 10 as the individual person identifying feature if it acquires a feature based on the feature point disposed in order to acquire the individual person identifying feature. On the other hand, the feature acquiring portion 8 transfers the feature of each feature point to the feature memory portion 9 or the expression judging portion 11 as the expression judging feature if it acquires the feature based on a feature point disposed to acquire the expression judging feature.

The feature acquiring portion 8 may process all faces which satisfy a predetermined condition of faces detected by the face detecting portion 7 when acquiring the individual person identifying feature. The predetermined condition is, for example, a face having a size over a predetermined size, a face at a predetermined position (for example, area in the center of image) or in a predetermined direction (for example, facing the front) and the like. In the case where the image pickup unit 1 is in the image pickup condition, when acquiring the expression judging feature, the feature acquiring portion 8 may acquire the feature with respect to only faces determined to be a processing object by the individual person identifying portion 10. The face determined to be a processing object by the individual person identifying portion 10 is, in other word, a face whose expression judging feature is determined to be memorized in the feature memory portion 9.

«Feature memory portion»

The feature memory portion 9 is constructed of a memory device, such as RAM, ROM. The feature memory portion 9 may be constructed of other memory device such as hard disk.

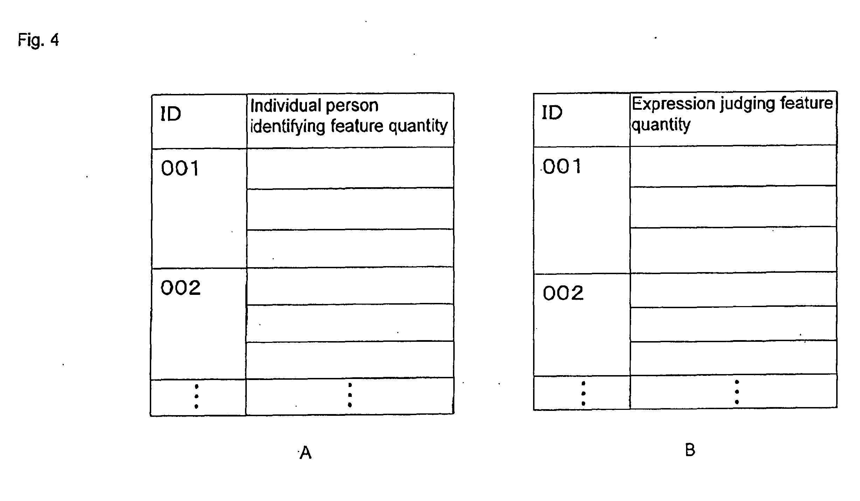

Fig. 4 is a diagram showing an example of a table which the feature memory portion 9 memorizes. Fig. 4A shows an example of a table having the individual person identifying feature. Fig. 4B shows an example of a table having the expression judging feature. When the image pickup unit 1 is in the registration condition, the feature memory portion 9 memorizes the individual person identifying feature and expression judging feature acquired by the feature acquiring portion 8 with correspondence to ID. At this time, the feature memory portion 9 memorizes the individual person identifying feature and expression judging feature acquired from a face image of the same person with correspondence to the same ID. Thus, the individual person identifying feature and expression judging feature about the same person can be acquired with the ID as a key.

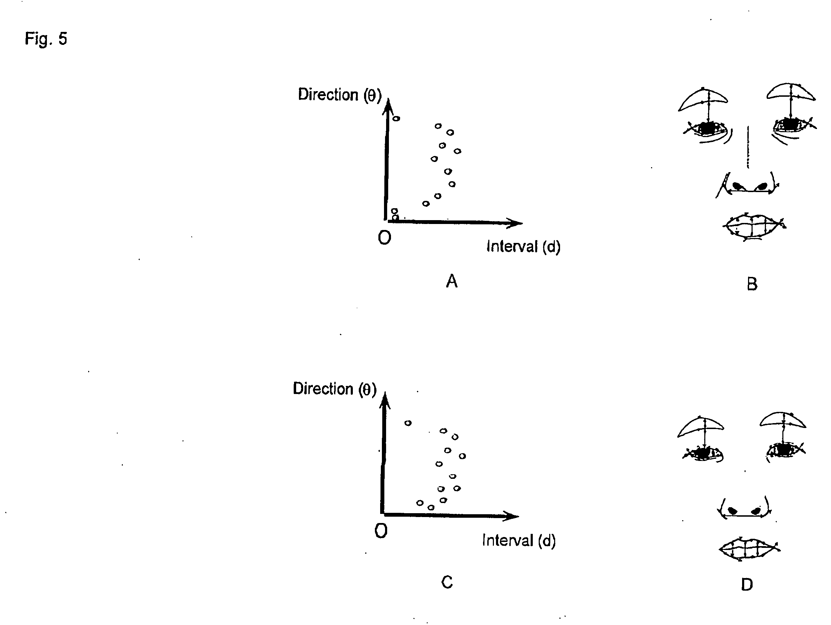

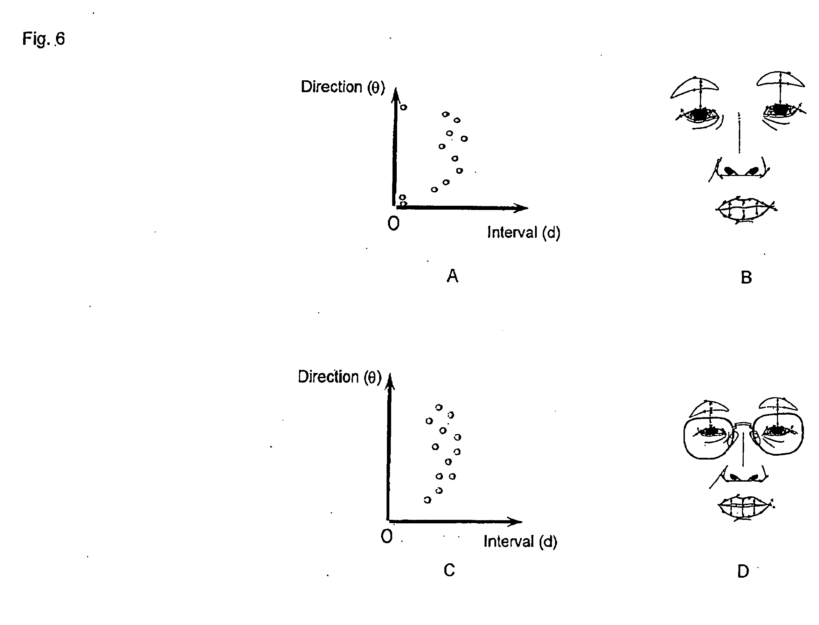

Fig. 5 is a diagram showing an example of the individual person identifying feature which the feature memory portion 9 memorizes. In Figs. 5A, C, as a specific example of the individual person identifying feature, values of the direction (directional property) and interval (cycle) acquired by folding the aforementioned Gabor filter at each feature point are memorized in the feature memory portion 9. Figs. 5B, D are diagrams showing an example of a face which is a basis for the individual person identifying feature shown in Figs. 5A, C. An arrow extending in the vertical direction or horizontal direction indicates an interval and an arrow extending in an oblique direction indicates the directional property. Fig. 6 is a diagram showing an example of the expression judging feature which the feature memory portion 9 memorizes. Although in Figs. 5, 6, the feature is acquired at the same feature point, each feature may be acquired at a different feature point. As for the individual person identifying feature, its value is permitted to be held about only feature points whose quantities hardly change in Figs. 5A, C. That is, the feature may be memorized about only feature points whose quantities hardly change due to a change in expression or change in photographing condition (degree of lighting). Conversely, as for the expression judging feature, its feature may be memorized about only feature points whose quantities change largely due to a change in the expression of a person. For example, the feature of the nose may be memorized as an individual person identifying feature because it hardly changes due to change in expression. Further, the feature of the mouth may be memorized as expression judging feature because it changes largely due to change in expression.

The feature memory portion 9 memorizes plural individual person identifying feature and expression judging feature with correspondence for each ID. In the example of Fig. 4, the feature memory portion 9 memorizes three of the individual person identifying feature and expression judging feature each for an ID. The quantity of each feature to be memorized with correspondence to an ID does not need to be restricted to three. Further, the quantities of the individual person identifying feature and expression judging feature to be memorized with correspondence to an TD do not need to be the same.

The feature memory portion 9 transfers data of necessary individual person identifying feature and expression judging feature to a request from the individual person identifying portion 10 and the expression judging portion 11 when the image pickup unit, 1 is in the image pickup condition.

<<Individual person identifying portion >>

The individual person identifying portion 10 operates regardless of the operating condition of the image pickup unit 1. The individual person identifying portion 10 executes identification processing for a person picked up in this image using individual person identifying feature acquired by the feature acquiring portion 8 and the individual person identifying feature memorized in the feature memory portion 9 about the image picked up by the image pickup portion 2. In other words, the individual person identifying portion 10 acquires an ID corresponding to the person picked up in the image of a processing object.

More specifically, the individual person identifying portion 10 acquires a degree of similarity as each individual person identifying feature by comparing (pattern matching) the individual person identifying feature acquired from a picked up image with each individual person identifying feature memorized in the feature memory portion 9. Next, the individual person identifying portion 10 selects an individual person identifier whose similarity degree is the highest, exceeding its threshold, and acquires an ID corresponding to that individual person identifier. The individual person identifying portion 10 judges that the ID or individual person identifying feature corresponding to a person having a face of a processing object is not memorized in the feature memory portion 9 if the degree of similarity acquired by each individual person identifying feature does not exceed the threshold. This threshold is a value acquired empirically and may be set up freely by user or a designer.

Further, the individual person identifying portion 10 may carry out identification processing using technology described in following documents.

Takio Kurita, "Statistical Method for Face Detection/Face Recognition" (retrieved September 27, 2004, Internet <URL: http://www.neurosci.aist.go.jp/~kurita/lecture/statface.pdf >

Kazuhiro Fukui (Kabushiki Kaisha Toshiba), "Facial Image Recognition in User Interface", SSII2000 Tutorial Lectures, Page 18-32

«Expression judging portion»

The expression judging portion 11 operates when the image pickup unit 1 is in the image pickup condition. Of faces contained in an image picked up by the image pickup portion 2, the expression judging portion 11 judges whether or not that expression is an expression desired by user with respect to a human face whose ID is acquired by the individual person identifying portion 10.

More specifically, the expression judging portion 11 acquires a degree of similarity as each expression judging feature by comparing (pattern matching) an expression judging feature corresponding to an ID acquired by the individual person identifying portion 10 with an expression judging feature acquired by the feature acquiring portion 8, Next, the expression judging portion 11 calculates statistic values (for example, gravity center, average value, sum value and the like) of acquired plural similarity degrees so as to obtain as a facial statistic value. The expression judging portion 11 can judge whether or not expression of that face is an expression desired by user depending on whether or not an acquired facial statistic value exceeds a threshold. For example, the expression judging portion 11 may determine that the expression of that face is an expression desired by user if its facial statistic value exceeds a threshold. This threshold is a value acquired empirically and may be set up freely by user or designer.

If plural faces are detected, the expression judging portion 11, calculates statistics of statistic values obtained about each face so as to acquire an image statistic value. Whether or not that image is an image containing an expression desired by user can be judged depending on whether or not this image statistic value exceeds its threshold. In the meantime, the expression judging portion 11 may execute a processing of comparing with a threshold based on only the facial statistic value of that face without acquiring any image statistic value if a single face is detected. Further, the expression judging portion 11 may judge that an image whose image statistic value is the highest is a best image.

The expression judging portion 11 can execute judgment processing using technology described in following document.

Yoshinori Isomichi, "Extraction of emotion from a facial image using parallel sandglass type neutral network" [retrieved October 05, 2004], Internet <URL: http://www.chi-its.hiroshima-cu.ac.jp/abstract/pdf/2001/ish ida_2001.pdf>

<Image accumulating portion>

The image accumulating portion 5 memorizes and controls an image picked up by the image pickup portion 2 or an image inputted into the image pickup unit 1 through the image input portion 3. The image inputted through the image input portion 3 is, for example, an image transmitted from an information processing unit (not shown) through an interface or an image read out from a recording medium (not shown). The image accumulating portion 5 is constituted using so-called ROM.

<Display portion>

The display portion 6 is constituted of an image output unit such as a liquid crystal display, EL display. The display portion 6 displays an image memorized in the image accumulating portion 5 or an image picked up by the image pickup portion 2.

[Operation example]

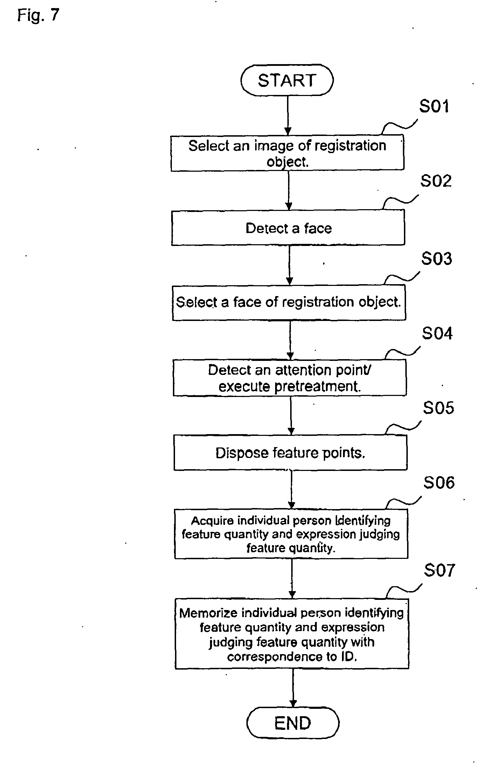

Hereinafter, the operation example of the image pickup unit 1 will be described. Fig. 7 is a flow chart showing an example of the operation of the image pickup unit 1 in the registration condition. First, the operation example of the image pickup unit 1 in the registration condition will be described with reference to Fig. 7. When user operates an input unit (not shown), an image containing a face desired by user (registration object image) is selected (S01). At this time, user can select a registration object image from an image picked up by the image pickup portion 2, an image inputted through the image input portion 3 and an image memorized by the image pickup unit 1 and memorized in the image accumulating portion 5.

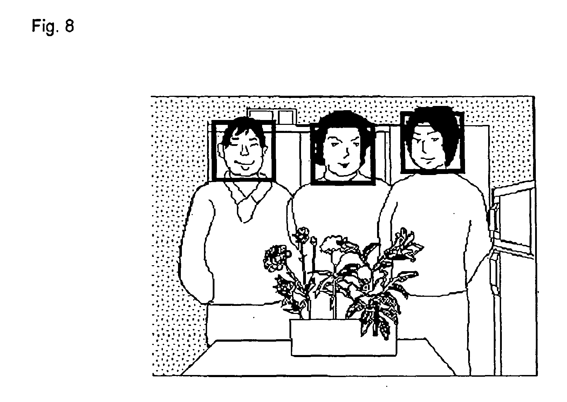

Next, the face detecting portion 7 detects a human face from a registration object image selected by user (S02). At this time, a detection result by the face detecting portion 7 is displayed on the display portion 6. Fig. 8 is a diagram showing an example of display at this time. For example, if three faces are detected from the registration object image, a face rectangle is displayed for each of the detected three faces. User can select one or plural faces each having a desired expression (registration object face) using an input unit (not shown) while seeing this display (S03).

If a registration object face is selected by user, the feature acquiring portion 8 executes detection of an attention point of the selected registration object face and its pretreatment (S04). Then, the feature acquiring portion 8 disposes the feature points based on the position of the attention point (S05) so as to acquire the individual person identifying feature and expression judging feature (S06). User can select whether he or she acquires (registers) only any one of the feature quantities or both of them. The feature memory portion 9 memorizes an ID with correspondence to a person specified by user for the individual person identifying feature and/or expression judging feature acquired by the feature acquiring portion 8 (S07). At this time, if there is no ID corresponding to a person specified by user, the feature memory portion 9 memorizes a feature with correspondence to a new ID.

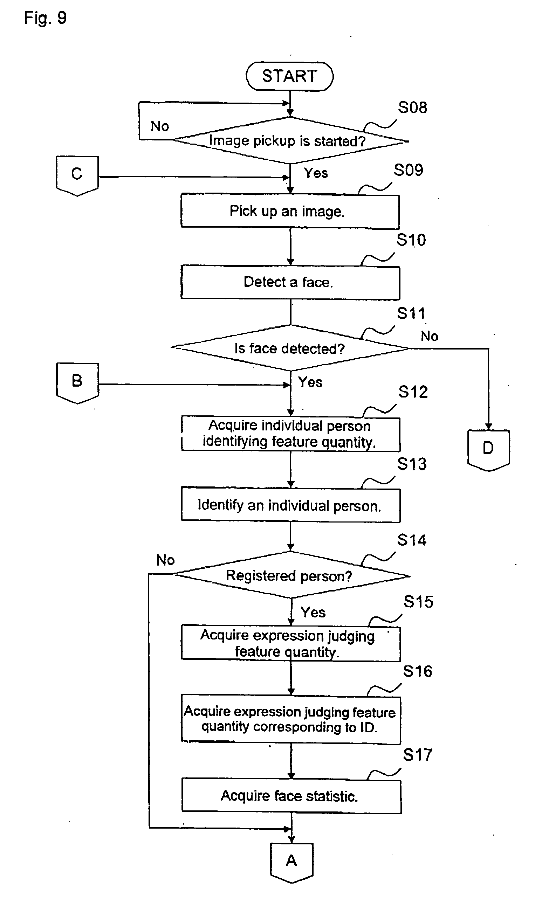

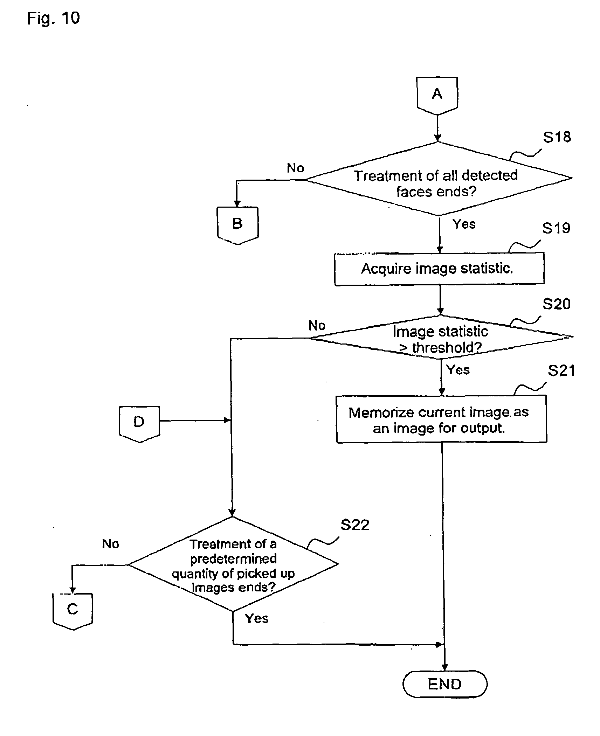

Next, an operation example of the image pickup unit 1 in the image pickup condition will be described. Figs. 9, 10 are flow charts showing the operation example of the image pickup unit 1 in the image pickup condition. If start of image pickup is instructed by user (for example, the shutter is released: S08-Yes), the image pickup portion 2 picks up an image (S09). Next, the face detecting portion 7 detects a face from an image picked by the image pickup portion 2 (S10). Unless any face is detected by the face detecting portion 7 (S11-No), determination processing of S22 is carried out. The determination processing of S22 will be described later.

On the other hand, if one or more faces are detected by the face detecting portion 7 (S11-Yes), the feature acquiring portion 8 acquires an individual person identifying feature about a detected face (S12). Then, the individual person identifying portion 10 identifies a person having the detected face and acquires an ID of this person by using the individual person identifying feature acquired by the feature acquiring portion 8 and each individual person identifying feature memorized by the feature memory portion 9 (S13). If this person is not a registered person, in other words, no ID of this person is acquired, that is, any individual person identifying feature and expression identifying feature of this person are not memorized (S14-No), the determination processing of S18 is carried out. The determination processing of S18 will be described later.

On the other hand, if this person is a registered person, in other words, an ID of this person can be acquired, that is, the individual person identifying feature and expression identifying feature of this person are memorized in the feature memory portion 9 (S14-Yes), the feature acquiring portion 8 acquires an expression identifying feature of this face (S15). Next, the expression judging portion 11 acquires an expression identifying feature from the feature memory portion 9 with correspondence to the ID of this person (S16). Then, the expression judging portion 11 acquires the degree of similarity of each feature point using the expression judging feature acquired by the feature memory portion 9 and the expression judging feature acquired from an image by the feature acquiring portion 8 so as to obtain a face statistical value (S17). The expression judging portion 11 memorizes this face statistical value.

Next, the expression judging portion 11 determines whether or not processings of S12-S17 is terminated about all faces detected by the face detecting portion 7 (S18). This determination processing may be carried out by for example, expression judging portion 11's acquiring a total number of faces detected by the face detecting portion 7 and comparing this number with a total number of the face statistical values memorized in the face detecting portion 7.

In the determination processing of S18, if it is determined that the processing has not been terminated with respect to all detected faces (S18-No), processing after S12 is executed with respect to faces not processed. On the other hand, if it is determined that the processing about all the detected faces has been completed (S18-Yes), the expression judging portion 11 acquires an image statistical value using a face statistical value memorized therein (S19). The expression judging portion 11 determines whether or not this image statistical value exceeds a threshold (S20). If the image statistical value does not exceed the threshold (520-No), the determination processing of S22 (termination judgment) is carried out. In the determination processing of S22, whether or not processing after S10 has been terminated with respect to a predetermined number of images is determined. In this processing, the face detecting portion 7 may count a number of images of an object for face detecting processing and when this number of images reaches a predetermined number, the expression determining portion 11 may determine by notifying the expression judging portion 11 of that matter. This determination processing (termination judgment) maybe carried out by any design. For example, the termination judgment may be executed not with the number of images of an object for face detection processing, but based on the number of images picked up by the image pickup portion 2 or time taken for the image pickup by the image pickup portion 2. More specifically, the image pickup may be terminated when the image pickup portion 2 judges that the pickup of a predetermined number of images is completed or when the image pickup portion 2 judges that the image pickup processing is executed for a predetermined interval of time.

Unless the processing on the predetermined number of images is completed (S22-No), the processing after S09 is carried out. On the other hand, if the processing is terminated with respect to a predetermined number of images (S22-Yes), the processing of the image pickup unit 1 is terminated. The image pickup unit 1 may notify user that acquisition of a desired image fails through the display portion 6.

On the other hand, if the image statistical value exceeds the threshold (S20-Yes), the image accumulating portion 5 memorizes an image of an object for current processing as an image for output (S21). Then, the processing by the image pickup unit 1 is terminated. Thus, judgment about whether or not an image statistical value of an image exceeds the threshold can be said to be part of the above-described termination judgment. At this time, the image pickup unit 1 may notify user through the display portion 6 that acquisition of a desired image succeeds. For example, the image pickup unit 1 may notify user of a success by displaying an acquired image for output on the display portion 6.

[Operation/effect]

Generally, the image pickup unit picks up only one image to a single image pickup instruction by user. Thus, whether or not a face having an expression desired by user is contained in a picked up image depends on timing of the image pickup instruction by the user. In other words, whether or not a face having an expression desired by user is contained in the picked up image depends on skill of user for picking up images. On the other hand, the image pickup unit 1 automatically picks up plural images to a single image pickup instruction by user. Next, whether or not a face having an expression desired by user is contained in each image picked up is determined based on the image statistical value. Then, only an image determined to contain a face having an expression desired by user is memorized in the image accumulating portion 5 as an image for output. Thus, user does not need to give an instruction for image pickup at a moment in which a face having an expression desired by user can be photographed. In other words, if an expression desired by user appears after the instruction is given, regardless of timing for user's giving the instruction for image pickup, an image at that time is memorized as an image for output. Therefore, user can pick up an image containing a desired face by picking up the image with the image pickup unit 1 regardless of his (photographer's) skill. Further, even if user requests another person to pick up an image upon taking picture with the image pickup unit 1, an image containing an expression desired by user is automatically taken regardless of the skill of the another person.

Generally, the display provided on such an image pickup unit as a digital camera is very small. Thus, it is not easy to determine whether or not an expression of a face contained in a picked up image is a desired expression by gazing at an image displayed on the display. Although individual expressions can be determined by enlarging an image, as the number of persons of a photographing object increases, operation amount and time required for that determination increases, which is a very troublesome work for user. User sometimes wants to know whether or not he succeeds in taking picture of an image containing a desired expression. If no image containing an expression desired by user is taken, the image pickup unit 1 displays this fact on the display portion 6. Thus, user does not need to determine whether or not he or she should take picture again by gazing at a taken image, so that he or she can determine whether or not he or she needs to take picture again based on the aforementioned display promptly.

Actually, desired expression varies depending on user. Some users like a serious expression and others like a smiling expression. Further, as for the smiling expression, some users like a smiling expression with the mouth closed and others like an expression with white teeth exposed outside. Therefore, if the "good expression" is defined in the image pickup unit preliminarily, actually, it is difficult to meet an expression which user likes sincerely.

The image pickup unit 1 enables user to select a desired expression and register it if it is set to the registration condition, At this time, user can register his or her desired expression by making an expression desired by him or her and taking picture of himself or herself with the image pickup portion 2. User can register an image containing a desired expression by inputting it into the image pickup unit 1 through the image input portion 3. Further, user can register an image containing a desired expression by selecting it from images (image already taken by the image pickup portion 2 and an image inputted through the image input portion 3) memorized in the image accumulating portion 5. The image pickup unit 1 can judge an expression of each user because it has such a configuration.

According to the image pickup unit 1, an image determined to contain no face having an expression desired by user or an image unnecessary for user is not memorized in the image accumulating portion 5. Thus, the storage capacity of the image accumulating portion 5 can be saved.

[Modification]

Although according to the above description, the image pickup unit 1 terminates image pickup processing with an image memorized when the image statistical value exceeds a threshold, it may be so constructed to be able to continue the image pickup processing until the number of taken pictures reaches a predetermined number. In this case, the image pickup unit 1 may be so constructed to memorize an image having the best (highest) image statistical value as an image for output or memorize all images (or part thereof) whose image statistical value exceeds the threshold as an image for output.

By providing each face detected by the face detecting portion 7 with priority order, the image pickup unit 1 may be so constructed to memorize an image having a face statistical value whose priority order is the highest as an image for output. This priority order may be memorized in the feature memory portion 9 with correspondence to the ID, set up by user each time when an image is picked up or determined from an image by the face detecting portion 7. If the priority order is determined by the face detecting portion 7, the determination may be carried out based on any criterion, for example, the biggest face, a face near the center of an image, face directed to the front and the like. Which criterion should be based for setting the priority order may be set to be selectable depending on user or designer.

Further, the image pickup unit 1 may be so constructed to start its operation in the image pickup condition (operation shown in the flow chart of Figs. 9, 10) if the composition is not moved more halfway than a predetermined time, the shutter button is kept pressed more than a predetermined time or a user's finger makes contact with the shutter button or is within a predetermined distance. In the meantime, whether or not the user' s finger keep contact with the shutter button or is within a predetermined distance can be determined by using a pre-touch sensor as the shutter button. If such a structure is adopted, the image pickup unit 1 may be so constructed that unless the shutter button is pressed ultimately, all images for output memorized in the image accumulating portion 5 are erased by this operation.

**Claims**

1. An image pickup unit (1) **characterized in** comprising:

    an image pickup means (2) for picking up a plurality of images electronically according to an image pickup instruction by user;
    a detecting means (7) for detecting a human face from an image selected by user or a picked up image;
    an acquiring means (8) for acquiring an image feature from a detected face;
    a memory means (9) for memorizing a feature acquired from an image selected by said user as said feature;
    a determining means (11) for, with part or all of the plural images picked up by said image pickup means (2) as an object for processing, comparing the feature memorized by said memory means (9) with the feature acquired from each of the picked up images so as to determine the degree of similarity; and
    a recording means (5) for, if it is determined that the both feature are similar as a result of said determination, recording this picked up image as an image for output.

2. The image pickup unit (1) according to claim 1 **characterized in** further comprising: a control means (5) for determining whether or not image pickup processing by said image pickup means (2) is ended and that
    said image pickup means (2), if it is determined that the image pickup processing by said control means (5) is ended, ends the image pickup processing.

3. The image pickup unit (1) according to claim 1 or 2 **characterized in that** said acquiring means (8) acquires said image feature by detecting an organ of face from a detected face, disposing plural feature points based on the position of the detected organ and acquiring the image feature of each feature point.

4. The image pickup unit (1) according to any one of claims 1-3 **characterized in** further comprising: an individual person identifying means (10) for specifying an individual person based on a detected face and
    that said acquiring means (8) acquires an individual person identifying feature for use for specifying an individual person based on the detected face and an expression judging feature for judging an expression of the detected face;
    said memory means (9) memorizes said individual person identifying feature and said expression judging feature acquired from the face of a same person with correspondence therebetween;
    said individual person identifying means (10) specifies an individual person based on the face detected from a picked up image by using the individual person identifying feature memorized in said memory means (9) and the individual person identifying feature acquired from said picked up image; and
    said determining means (11) determines the degree of similarity by comparing the expression judging feature memorized in said memory means (9) with correspondence to the individual person identifying feature of said specified individual person with the expression judging feature acquired from said picked up image.

5. An image pickup method **characterized in** comprising:

    a step for an information processing unit (1) comprising an image pickup means (2) for picking up an image electronically, a memory means (9) for memorizing a feature acquired from an image, and a recording means (5) for recording an image picked up by said image pickup means (2) to detect a human face from an image selected by user:
    a step for said information processing unit (1) to acquire an image feature from the face of an image selected by said user;
    a step for said information processing unit (1) to memorize a feature acquired from the image selected by said user in said memory means (9);
    a step for said information processing unit (1) to instruct said image pickup means (2) to pick up plural images according to an image pickup instruction by the user;
    a step for said information processing unit (1) to detect a human face from an image picked up according to the image pickup instruction by said user;
    a step for said information processing unit (1) to acquire an image feature from the face of an image picked up according to the image pickup instruction by said user;

a step for said information processing unit (1) to determine the degree of similarity by comparing a feature memorized in said memory means (9) with a feature acquired from an image picked up according to the image pickup instruction by said user; and

a step for said information processing unit (1) to record a picked up image in said recording means (5) as an image for output when it is determined that both feature quantities are similar as a result of said determination.

6. A program **characterized in** making an information processing unit (1) comprising an image pickup means (2) for picking up an image electronically, a memory means (9) for memorizing a feature acquired from an image, and a recording means (5) for recording an image picked up by said image pickup means (2) execute:

a step of detecting a human face from an image selected by user;

a step of acquiring an image feature from the face of an image selected by said user;

a step of memorizing a feature acquired from the image selected by said user in said memory means (9);

a step of instructing said image pickup means (2) to pick up plural images according to an image pickup instruction by the user;

a step of detecting a human face from an image picked up according to the image pickup instruction by said user;

a step of acquiring an image feature from the face of an image picked up according to the image pickup instruction by said user;

a step of determining the degree of similarity by comparing a feature memorized in said memory means (9) with a feature acquired from an image picked up according to the image pickup instruction by said user; and

a step of recording a picked up image in said recording means (5) as an image for output when it is determined that both feature quantities are similar as a result of said determination.

Fig. 1

EP 1 648 166 A2

Fig. 2

EP 1 648 166 A2

15

Fig. 3

Fig. 4

Table A

| ID | Individual person identifying feature quantity |
|---|---|
| 001 | |
| 002 | |
| ⋮ | ⋮ |

Table B

| ID | Expression judging feature quantity |
|---|---|
| 001 | |
| 002 | |
| ⋮ | ⋮ |

A

B

EP 1 648 166 A2

Fig. 5

Direction (θ)

O

Interval (d)

A

B

Direction (θ)

O

Interval (d)

C

D

EP 1 648 166 A2

Fig. 6

Fig. 7

```
                    ┌─────────────┐
                    │    START    │
                    └──────┬──────┘
                           │              S01
                           ▼
              ┌────────────────────────────┐
              │ Select an image of registration │
              │          object.            │
              └────────────┬───────────────┘
                           │              S02
                           ▼
              ┌────────────────────────────┐
              │        Detect a face        │
              └────────────┬───────────────┘
                           │              S03
                           ▼
              ┌────────────────────────────┐
              │ Select a face of registration object. │
              └────────────┬───────────────┘
                           │              S04
                           ▼
              ┌────────────────────────────┐
              │   Detect an attention point/  │
              │     execute pretreatment.   │
              └────────────┬───────────────┘
                           │              S05
                           ▼
              ┌────────────────────────────┐
              │     Dispose feature points.   │
              └────────────┬───────────────┘
                           │              S06
                           ▼
              ┌────────────────────────────┐
              │ Acquire individual person identifying │
              │ feature quantity and expression judging │
              │      feature quantity.      │
              └────────────┬───────────────┘
                           │              S07
                           ▼
              ┌────────────────────────────┐
              │ Memorize individual person identifying │
              │  feature quantity and expression  │
              │    judging feature quantity with  │
              │     correspondence to ID.   │
              └────────────┬───────────────┘
                           │
                           ▼
                    ┌─────────────┐
                    │     END     │
                    └─────────────┘
```

Fig. 8

Fig. 9

```
                    ( START )

         No      ╱──────────────╲        S08
        ┌───────< Image pickup is started? >
        │         ╲──────────────╱
    ┌───┐                │ Yes              S09
    │ C ├────────────────┤
    └───┘         ┌───────────────┐
                  │ Pick up an image. │
                  └───────────────┘
                          │                 S10
                  ┌───────────────┐
                  │  Detect a face.  │
                  └───────────────┘
                          │                 S11
                  ╱───────────────╲      No
                 < Is face detected? >──────┐
                  ╲───────────────╱         │
    ┌───┐                │ Yes              │
    │ B ├────────────────┤                  │
    └───┘        ┌──────────────────┐       │
                 │ Acquire individual person │    S12
                 │ identifying feature quantity. │
                 └──────────────────┘    ┌───┐
                          │           S13 │ D │
                 ┌──────────────────┐    └───┘
                 │ Identify an individual person. │
                 └──────────────────┘
                          │                 S14
         No      ╱───────────────╲
        ┌───────< Registered person? >
        │         ╲───────────────╱
        │                │ Yes              S15
        │       ┌──────────────────┐
        │       │ Acquire expression judging │
        │       │   feature quantity.    │
        │       └──────────────────┘
        │                │                 S16
        │       ┌──────────────────┐
        │       │ Acquire expression judging feature │
        │       │ quantity corresponding to ID. │
        │       └──────────────────┘
        │                │                 S17
        │       ┌──────────────────┐
        │       │  Acquire face statistic. │
        │       └──────────────────┘
        │                │
        └────────────────┤
                      ┌───┐
                      │ A │
                      └───┘
```

Fig. 10

A

S18

No ← Treatment of all detected faces ends?

B

Yes

S19

Acquire image statistic.

S20

No ← Image statistic > threshold?

Yes

S21

Memorize current image as an image for output.

D →

S22

No ← Treatment of a predetermined quantity of picked up images ends?

C

Yes

END